# EUROPEAN PATENT APPLICATION

(11) **EP 3 828 719 A2**
(43) Date of publication of application: **02.06.2021**
(21) Application number: 21163336.7
(22) Date of filing: 18.03.2021
(51) Int. Cl.: G06F 16/00

(54) **METHOD AND APPARATUS FOR GENERATING MODEL FOR REPRESENTING HETEROGENEOUS GRAPH NODE, ELECTRONIC DEVICE, STORAGE MEDIUM, AND COMPUTER PROGRAM PRODUCT**

(30) Priority: 19.06.2020 CN 202010564132
(71) Applicant: BEIJING BAIDU NETCOM SCIENCE AND TECHNOLOGY CO. LTD., 100085 Beijing (CN)
(72) Inventor: LI, Weibin, Beijing, 100085 (CN); ZHU, Zhifan, Beijing, 100085 (CN); FENG, Shikun, Beijing, 100085 (CN); HE, Jingzhou, Beijing, 100085 (CN); HUANG, Shiwei, Beijing, 100085 (CN)
(74) Representative: Lucke, Andreas

(57) **Abstract**

A method for generating a model for representing heterogeneous graph node, an apparatus, an electronic device, a storage medium, a computer program product are provided. An implementation of the method may include: acquiring a training data set, wherein the training data set includes node walk path information obtained by sampling a heterogeneous graph according to different meta paths; and training, based on a gradient descent algorithm, an initial heterogeneous graph node representation model with the training data set as an input of the initial heterogeneous graph node representation model, to obtain a heterogeneous graph node representation model.

## Description

### TECHNICAL FIELD

Embodiments of the present disclosure relate to the field of computer technologies, and particularly to natural language processing, knowledge graph, and deep learning techniques, more particularly to a method and apparatus for generating a model for representing heterogeneous graph nodes.

### BACKGROUND

Currently, graph network representation techniques are widely used, such as node classification, link prediction, community detection, and the like. In reality, there are a large number of heterogeneous graphs including various node types and edge types. In order to learn the semantic information of nodes of different types, a method adopted in a graph network representation technology for a heterogeneous graph is generally as follows: acquiring different instance walk sequences through meta-path sampling, serving the instance walk sequences as sentence sequences, training the walk sequences through a training method of a word embedding model, and finally obtaining a representation result of a heterogeneous graph node. This method of learning node representations adopts only one meta-path and loses the semantic information of other meta-paths, resulting in the final optimization being a sub-optimal result.

### SUMMARY

Embodiments of the present disclosure provide a method and apparatus for generating a model for representing a heterogeneous graph node, a device, a storage medium, and a computer program product.

According to a first aspect, some embodiments of the present disclosure provide a method for generating a model for representing a heterogeneous graph node, the method includes: acquiring a training data set, wherein the training data set includes node walk path information obtained by sampling a heterogeneous graph according to different meta paths; and training, based on a gradient descent algorithm, an initial heterogeneous graph node representation model with the training data set as an input of the initial heterogeneous graph node representation model, to obtain a heterogeneous graph node representation model.

According to a second aspect, some embodiments of the present disclosure provide an apparatus for generating a model for representing a heterogeneous graph node, the apparatus includes: a first acquisition unit, configured to acquire a training data set, wherein the training data set includes node walk path information obtained by sampling a heterogeneous graph according to different meta paths; and a training unit, configured to train, based on a gradient descent algorithm, an initial heterogeneous graph node representation model with the training data set as an input of the initial heterogeneous graph node representation model, to obtain a heterogeneous graph node representation model.

According to a third aspect, some embodiments of the present disclosure provide an electronic device, the electronic device includes: at least one processor; and a memory, communicatively connected to the at least one processor; where the memory stores instructions executable by the at least one processor, when the instructions are executed by the at least one processor, causing the at least one processor to perform the method according to any one of embodiments in the first aspect.

According to a fourth aspect, some embodiments of the present disclosure provide a non-transitory computer-readable storage medium storing computer instructions thereon, where the computer instructions, when executed by a processor, causes the processor to perform the method of any one of embodiments in the first aspect.

According to a fifth aspect, some embodiments of the present disclosure provide a computer program product. The computer program product includes a computer program, the computer program, when executed by a processor, causes the processor to implement the method of any one of embodiments in the first aspect.

The technique of the present disclosure may acquire semantic information of different meta-paths by combining multiple meta-paths, solves the problem that a node representation method based on one meta-path can lose the path information of the heterogeneous graph, and enhances the node representation capability directing to the heterogeneous graph.

It should be understood that the content described herein is not intended to identify the key or important features of embodiments of the present disclosure, nor is it intended to limit the scope of the present disclosure. Other features of the present disclosure will be easily understood by the following description.

### BRIEF DESCRIPTION OF THE DRAWINGS

The accompany drawings are for better understanding the solution, and do not form a limitation to the present disclosure. Here,
Fig. 1 is an architectural diagram of an exemplary system in which an embodiment of the present disclosure may be implemented;
Fig. 2 is a flowchart of a method for generating a model for representing heterogeneous graph node according to an embodiment of the present disclosure;
Fig. 3 is an illustrative schematic diagram of a heterogeneous graph according to an embodiment of the present disclosure;
Fig. 4 is an application scenario of the method for generating a model for representing heterogeneous graph node according to an embodiment of the present disclosure;
Fig. 5 is a flowchart of a method for generating a model for representing heterogeneous graph node according to another embodiment of the present disclosure;
Fig. 6 is a structural diagram of an apparatus for generating a model for representing heterogeneous graph node according to an embodiment of the present disclosure;
FIG. 7 illustrates a structural schematic diagram of a computer system adapted to implement a terminal device and/or a server of embodiments of the present disclosure.

### DETAILED DESCRIPTION OF EMBODIMENTS

Exemplary embodiments of present disclosure will be described below in detail with reference to the accompanying drawings, including various details of embodiments of the present disclosure to facilitate understanding, and they shall be considered as merely exemplary. Therefore, those skilled in the art should realize that various changes and modifications can be made to embodiments described herein without departing from the scope of the present application. Similarly, for clarity and conciseness, the following description omits the description of well-known functions and structures.

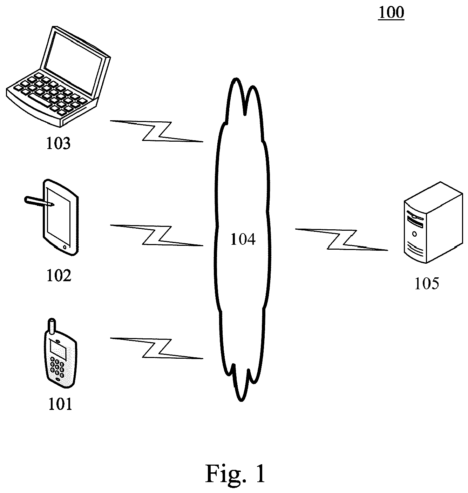

Fig. 1 illustrates an architectural diagram 100 of an exemplary system in which the method and apparatus for generating a model for representing heterogeneous graph node may be applied.

As shown in Fig. 1, the system architecture 100 may include terminal devices 101, 102, 103, a network 104, and a server 105. The network 104 is used to provide a communication link medium between the terminal devices 101, 102, 103 and the server 105. The network 104 may include various types of connections, such as wired, wireless communication links, or optic fibers.

The terminal devices 101, 102 and 103 may be hardware or software supporting network connection to perform data interaction and data processing. When the terminal devices 101, 102 and 103 are hardware, they can be various electronic devices which support information interaction, network connection, and image capturing and other functions, including but not limited to smart phones, tablet computers, e-book readers, laptop and desktop computer, etc. When the terminal devices 101, 102 and 103 are software, they can be installed in the electronic devices listed above. It can be implemented into multiple software or software modules (for example, software or software modules used to provide distributed services), or a single software or software module. There is no specific limitation here.

The server 105 may be a server that provides various services, such as a backend server that performs training an initial heterogeneous graph node representation model based on the training data set sent from the terminal devices 101, 102, and 103. The backend server may train an initial heterogeneous graph node representation model to obtain a trained heterogeneous graph node representation model. Alternatively, the backend server may feed the heterogeneous graph node representation model to a terminal device, for being used by the terminal device. As an example, the server 105 maybe a could server.

It should be noted that the server can be hardware or software. When the server is hardware, it can be realized as a distributed server cluster composed of multiple servers or a single server. When the server is software, it can be implemented into multiple software or software modules (for example, software or software modules used to provide distributed services), or a single software or software module. It is no limited herein.

It should be noted that, the method for generating a model for representing heterogeneous graph node provided by embodiments of the present disclosure can be executed by the server, by the terminal device, or by the cooperation between the server and the terminal device. Accordingly, each part of the information processing device (such as each unit, subunit, module, submodule) can be provided in the server, in the terminal equipment, or in the server and terminal equipment respectively.

It should be understood that the number of terminal devices, networks, and servers in Fig. 1 is only schematic. According to the implementation needs, it can have any number of terminal devices, networks and servers. When the electronic device on which the method for generating a model for representing a heterogeneous graph node does not require data transmission with other electronic devices, the system architecture may include only the electronic device (e.g., the server or the terminal device) on which the method for sending information running thereon.

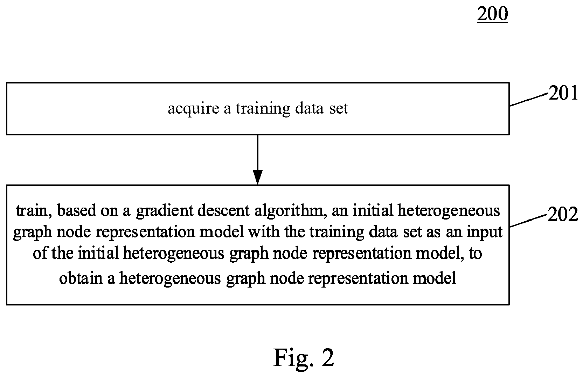

With further reference to Fig. 2, a flow 200 of a method for generating a model for representing a heterogeneous graph node is shown, including the steps of:

Step 201, acquiring a training data set.

In this embodiment, an execution body (for example, the terminal device or the server in Fig. 1) of the method for generating a model for representing heterogeneous graph node may acquire the training data set remotely or locally by means of a wired or wireless connection. The training data set includes node walk path information obtained by sampling a heterogeneous graph according to different meta paths.

A heterogeneous graph is also referred to as a HIN (Heterogeneous Information Network) or a heterogeneous graph network in which a plurality types of nodes and edges, an edge may be understood as a connection between nodes of two types. Graphs in the real world are generally heterogeneous graphs including a plurality of types of nodes and edges. Because heterogeneous graph contains more comprehensive information and more rich semantics, it is widely used in many data mining tasks.

A meta-path is a compound relationship connecting two node objects, and is a widely used structure for capturing semantic. The structures of different meta-paths in this embodiment are different. The node walk path information may be obtained by sampling the heterogeneous graph according to a meta-path, and the node walk path represented by the node walk path information includes a plurality of meta-paths. As an example, the execution body may sample the heterogeneous graph based on the random walk strategy, to obtain the node walk path information of the meta path, and obtain the heterogeneous fields of various types of nodes in the heterogeneous graph network.

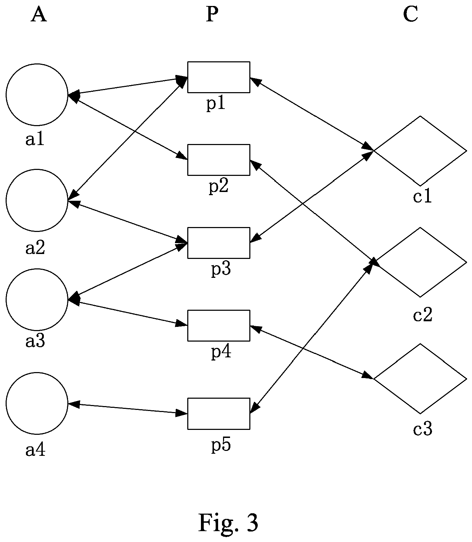

As an example, as shown in Fig. 3, the heterogeneous network includes three different types of nodes, respectively A, P, and C. For example, the three types of nodes A, P, and C may represent a movie, an actor, and a director in sequence, where the node A of the movie type includes a movie a1, a movie a2, a movie a3, and a movie a4; the node P of the actor type includes an actor p1, an actor p2, an actor p3, an actor p4, and an actor p5, and the node C of the director type includes a director C1, a director C2, and a director C3. Based on these three types of nodes, different meta paths may be constructed. For example, A-P-C-P-A, C-P-C, and A-P-A may be set as meta paths of the heterogeneous graph of Fig. 3. The meta-path A-P-A (movie-actor-movie) describes the relation of that the two movies shares a same actor, while the C-P-C (movie-director-movie) indicate the relation of that the two movies are done by a same director. It can be seen that depending on the meta-path, the relationships between nodes in the heterogeneous graph can have different semantics. The meta-path can be specifically set according to the structure of the heterogeneous graph and the result information to be obtained, which is not limited herein. After the meta-path is set, for each meta-path, the above-mentioned execution body may sample the heterogeneous network according to the node types specified in the meta-path in the graph, to obtain the node walk path information.

For example, for the meta-path A-P-C-P-A, the execution body may obtain the node walk path ai-pi-ci- p3-a3-p4-c3 through sampling, and for the meta-path A-P-A, the execution body may the node walk path a1-p1-a2-p3-a3-p4 through sampling.

It should be noted that the heterogeneous graph may be a heterogeneous graph including a large number of node types and edge types, the relationship therein is intricate. For each meta-path, the execution body may obtain a plurality of node walk path information through sampling, to obtain rich and accurate semantic information directing to the heterogeneous graph.

Step 202: training, based on a gradient descent algorithm, an initial heterogeneous graph node representation model with the training data set as an input of the initial heterogeneous graph node representation model, to obtain a heterogeneous graph node representation model.

In this embodiment, the execution body may serve the training data set obtained in step 201 as the input of an initial heterogeneous graph node representation model, and the initial heterogeneous graph node representation model is trained to obtain the heterogeneous graph node representation model. The heterogeneous graph node representation model is used to obtain a node representation result of each node in the heterogeneous graph according to each type of node and each type of edge in the heterogeneous graph.

In this embodiment, the initial heterogeneous graph node representation model may employ various machine learning models including, but not limited to, neural network models, deep learning models, and the like. In some alternative implementations of the present embodiment, the initial heterogeneous graph node representation model employs a skip-gram model. The execution body obtains the heterogeneous fields of various types of nodes in the heterogeneous graph network based on the random walking of the meta-path, and then process the obtained heterogeneous fields by the skip-gram mode, finally obtains the network embedded representation of each node in the heterogeneous graph, so that the semantic relationships of the heterogeneous graph can be effectively and efficiently learned while the heterogeneous graph network structure is preserved.

Specifically, for each piece of training data in the training data set, the execution body may input the piece of training data into the heterogeneous graph node representation model updated after training with a previous piece of training data, and update parameters of the updated heterogeneous graph node representation model. During the training process, the above-mentioned execution body can solve the model iteratively step by step through the gradient descent method until the model converges, to obtain a minimized loss function and value of model parameter, and the converged model is determined as the heterogeneous graph node representation model.

As an example, the heterogeneous graph may be an association relationship heterogeneous graph network between a representation user, an application, and an advertisement in a mobile advertisement ecosystem, and a node representation result of each user, each application, and each advertisement may be obtained through the network heterogeneous graph node representation model. The node representation result may be represented by a vector, a matrix, or the like.

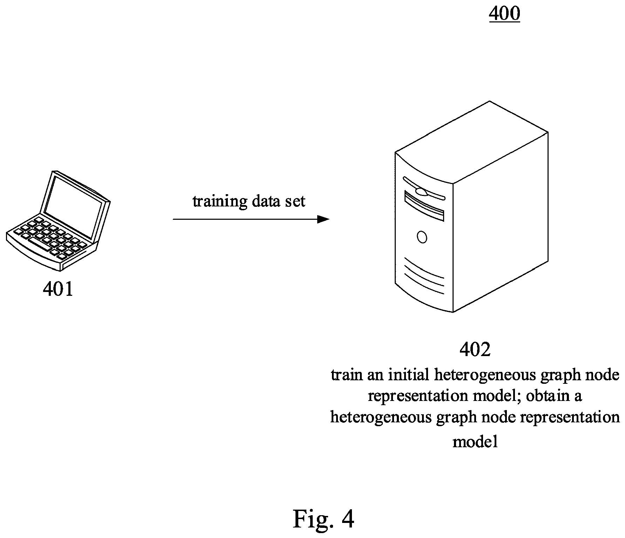

With further reference to Fig. 4, Fig. 4 is a schematic diagram of an application scenario of the method for generating a model representing a heterogeneous graph node according to the present embodiment. In the application scenario of Fig. 4, the terminal device 401 stores a heterogeneous graph and node walk path information obtained by sampling the heterogeneous graph based on different meta-paths, where the nodes in the heterogeneous graph include nodes representing users, applications, and advertisements in the mobile advertisement ecosystem. First, the server 402 acquires a training data set from the terminal device 401, where the training data set includes node walk path information obtained by sampling the heterogeneous graph according to different meta paths. Then, based on the gradient descent algorithm, the server 402 trains an initial heterogeneous graph node representation model with the training data set as input to the initial heterogeneous graph node representation model, to obtain the heterogeneous graph node representation model.

The technology of the present disclosure can acquire semantic information of different meta-paths by combining multiple meta-paths, solves the problem that a node representation method based on one meta-path can lose the path information of the heterogeneous graph, and enhances the node representation capability directing to the heterogeneous graph.

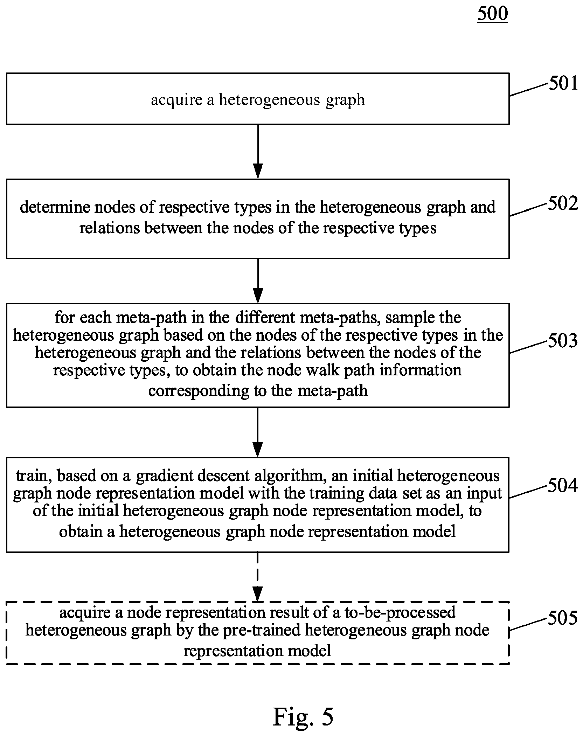

With further reference to Fig. 5, which illustrates a schematic flow 500 of a method for generating a model representing a heterogeneous graph node according to another embodiment of the present disclosure, including the steps of:

Step 501, acquiring a heterogeneous graph.

In this embodiment, the execution body of the method for generating a model for representing the heterogeneous graph node may obtain the heterogeneous graph remotely or locally by means of a wired or wireless connection.

Step 502: determining nodes of respective types in the heterogeneous graph and relations between the nodes of the respective types.

In the present embodiment, the above-mentioned execution body can determine nodes of respective types in the heterogeneous graph and the relations between the nodes of respective types.

It should be noted that, based on the heterogeneous graph, the nodes of respective types in the heterogeneous graph, and the relations between the nodes of respective types, the present embodiment obtains the model for representing a heterogeneous graph node and the node representation result of each node in the heterogeneous graph through subsequent processing steps. This embodiment does not limit the order in which steps 501 and 502 are performed. In some examples, the above-described execution body may determine the nodes of respective types in the heterogeneous graph and the relations between the node of respective types based on the heterogeneous graph. In other examples, based on the nodes of respective types and the relations between the nodes of respective types, the above-described execution body may determine the heterogeneous graph network corresponding thereto.

In the present embodiment, the above-mentioned execution body may use the heterogeneous graph, the nodes of respective types in the heterogeneous graph, and the relations between the nodes of respective types as data basis for acquiring the training data set, to process to obtain the training data set, thereby extending the practicability of the present embodiment.

Step 503: for each meta-path in the different meta-paths, sampling the heterogeneous graph according to the nodes of the respective types in the heterogeneous graph and the relations between the nodes of the respective types, to obtain the node walk path information corresponding to the meta-path.

In the present embodiment, the number and structure of the meta-paths may be specifically set according to the network structure of the heterogeneous graph. The above-mentioned execution body samples the heterogeneous graph for each of a plurality of different meta-paths, to obtain the node walk path information corresponding to each meta-path.

In this embodiment, a plurality of node walk path information can be obtained based on a plurality of different meta-paths. One piece of node walk path information can be used as one piece of training data in the training data set, and a plurality of pieces of node walk path information contain more abundant semantic information of the heterogeneous graph, so that more accurate training data can be provided for the heterogeneous graph node representation model, to improve the accuracy of the heterogeneous graph graph node representation model for the heterogeneous graph node representation.

Step 504: training, based on a gradient descent algorithm, an initial heterogeneous graph node representation model with the training data set as an input of the initial heterogeneous graph node representation model, to obtain a heterogeneous graph node representation model.

In this embodiment, step 504 is substantially identical to step 202 in the corresponding embodiment of Fig. 2, and details are not described herein.

As can be seen from Fig. 5, compared with the corresponding embodiment of Fig. 2, the flow 500 of the method for generating a model for representing the heterogeneous graph node in the present embodiment highlights the heterogeneous graph processing process before acquiring the training data set and the acquisition process of the training data set. As such, the solution described in this embodiment is more practical, and may obtain a training data set containing riche semantic information of the heterogeneous graph.

In some alternative implementations of the present embodiment, the following steps may also be included:

Step 505: acquiring a node representation result of a to-be-processed heterogeneous graph by the pre-trained heterogeneous graph node representation model.

In this example, the may be any heterogeneous graph.

As an example, based on the heterogeneous graph, the above-mentioned execution body may determine nodes of respective types therein and relations between the nodes of the respective types h, and then obtain a node representation result of the to-be-processed heterogeneous graph through a pre-trained heterogeneous graph node representation model. In this way, the solution described in this embodiment can obtain an accurate node representation result based on the heterogeneous graph to be processed, thereby enriching an acquisition method of the node representation result of the heterogeneous graph.

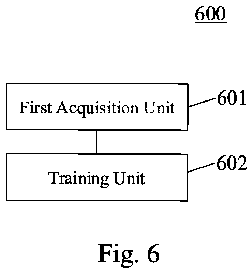

With further reference to Fig. 6, as an implementation of the method shown in the above figures, an embodiment of the present disclosure provides an apparatus for generating a model for representing a heterogeneous graph node. The apparatus embodiment is corresponding to the method embodiment shown in Fig. 2. In addition to the features describe below, the above-described step 401- step 409 may further include the same features as those of the embodiments corresponding to Fig. 2 and the alternative implementation thereof, and produce same effects, and details are not described herein.

As shown in Fig. 6, the apparatus for generating a model for representing a heterogeneous graph node according to the present embodiment, includes: a first acquisition unit 601, configured to acquire a training data set, where the training data set includes node walk path information obtained by sampling a heterogeneous graph according to different meta paths; and a training unit 602, configured to train, based on a gradient descent algorithm, an initial heterogeneous graph node representation model with the training data set as an input of the initial heterogeneous graph node representation model, to obtain a heterogeneous graph node representation model.

In some implementations, the above apparatus for generating a model includes: a second acquisition unit (not shown), configured to acquire the heterogeneous graph; and a determination unit (not shown), configured to determine nodes of respective types in the heterogeneous graph and relations between the nodes of the respective types.

In some implementations, the first acquisition unit 501 is further configured to: for each meta-path in the different meta-paths, sample the heterogeneous graph according to the nodes of the respective types in the heterogeneous graph and the relations between the nodes of the respective types, to obtain the node walk path information corresponding to the meta-path.

In some implementations, the apparatus for generating the model further includes: a node representation unit (not shown), configured to acquire a node representation result of a to-be-processed heterogeneous graph by the pre-trained heterogeneous graph node representation model.

In some implementations, the initial heterogeneous graph node representation model is a skip-gram model.

In the embodiment, the apparatus for generating a model for representing a heterogeneous graph node acquires semantic information of different meta-paths by combining multiple meta-paths, solves the problem that a node representation method based on one meta-path can lose the path information of the heterogeneous graph, and enhances the node representation capability directing to the heterogeneous graph.

According to some embodiments of the present disclosure, an electronic device and a readable storage medium are provided.

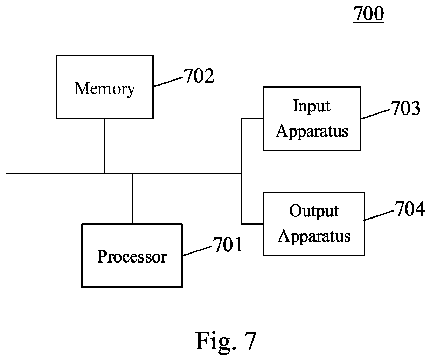

As shown in Fig. 7, which is a block diagram of an electronic device of a method for generating a model for representing a heterogeneous graph node according to an embodiment of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processing, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 7, the electronic device includes: one or more processors 701, a memory 702, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories if desired. Similarly, a plurality of electronic devices may be connected, and the devices provide some necessary operations (for example, as a server array, a set of blade servers, or a multi-processor system). In Fig. 6, one processor 601 is used as an example.

The memory 702 is a non-transitory computer readable storage medium provided by an embodiment of the present disclosure. The memory stores instructions executable by at least one processor, so that the at least one processor performs the method for generating a model for representing heterogeneous graph node provided by embodiments of the present disclosure. The non-transitory computer readable storage medium of the present disclosure stores computer instructions for causing a computer to perform the method for generating a model for representing heterogeneous graph node provided by embodiments of the present disclosure.

The memory 702, as a non-transitory computer readable storage medium, may be used to store non-transitory software programs, non-transitory computer executable programs and modules, such as program instructions/modules corresponding to the method for generating a model for representing heterogeneous graph node in embodiments of the present disclosure (for example, the message sending module 601, the message acquisition module 602 shown in Fig. 6). The processor 701 executes the non-transitory software programs, instructions, and modules stored in the memory 702 to execute various functional applications and data processing of the server, that is, to implement the method for generating a model for representing heterogeneous graph node in the foregoing method embodiment.

The memory 702 may include a storage program area and a storage data area, where the storage program area may store an operating system and at least one function required application program; and the storage data area may store data created by the use of the electronic device according to the method for generating a model for representing heterogeneous graph node, etc. In addition, the memory 702 may include a high-speed random access memory, and may also include a non-transitory memory, such as at least one magnetic disk storage device, a flash memory device, or other non-transitory solid-state storage devices. In some embodiments, the memory 702 may optionally include memories remotely provided with respect to the processor 701, and these remote memories may be connected to the electronic device of the method for generating a model for representing heterogeneous graph node through a network. Examples of the above network include but are not limited to the Internet, intranet, local area network, mobile communication network, and combinations thereof.

The electronic device of the method for processing parking may further include: an input apparatus 703 and an output apparatus 704. The processor 701, the memory 702, the input apparatus 703, and the output apparatus 704 may be connected through a bus or in other methods. In Fig. 7, connection through a bus is used as an example.

The input apparatus 703 may receive input digital or character information, and generate key signal inputs related to user settings and function control of the electronic device of the method for processing parking, such as touch screen, keypad, mouse, trackpad, touchpad, pointing stick, one or more mouse buttons, trackball, joystick and other input apparatuses. The output apparatus 704 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), the Internet, and blockchain networks.

The computer system may include a client and a server. The client and the server are generally far from each other and usually interact through the communication network. The relationship between the client and the server is generated by computer programs that run on the corresponding computer and have a client-server relationship with each other.

The solution described in embodiments of the present disclosure may acquire semantic information of different meta-paths by combining multiple meta-paths, solves the problem that a node representation method based on one meta-path can lose the path information of the heterogeneous graph, and enhances the node representation capability directing to the heterogeneous graph.

It should be understood that the various forms of processes shown above may be used to reorder, add, or delete steps. For example, the steps described in the present disclosure may be performed in parallel, sequentially, or in different orders. As long as the desired results of the technical solution disclosed in the present disclosure can be achieved, no limitation is made herein.

The above specific embodiments do not constitute limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

## Claims

1. A method for generating a model for representing a heterogeneous graph node, comprising:
acquiring (201) a training data set, wherein the training data set includes node walk path information obtained by sampling a heterogeneous graph according to different meta paths; and
training (202, 504), based on a gradient descent algorithm, an initial heterogeneous graph node representation model with the training data set as an input of the initial heterogeneous graph node representation model, to obtain a heterogeneous graph node representation model.

2. The method according to claim 1, wherein before the acquiring (201) the training data set, the method further comprises:
acquiring (501) the heterogeneous graph; and
determining (502) nodes of respective types in the heterogeneous graph and relations between the nodes of the respective types.

3. The method according to claim 2, wherein the acquiring (201) the training data set comprises:
for each meta-path in the different meta-paths, sampling (503) the heterogeneous graph according to the nodes of the respective types in the heterogeneous graph and the relations between the nodes of the respective types, to obtain the node walk path information corresponding to the meta-path.

4. The method according to claim 2, wherein the method further comprises:
acquiring (505) a node representation result of a to-be-processed heterogeneous graph by the pre-trained heterogeneous graph node representation model.

5. The method according to claim 1, wherein the initial heterogeneous graph node representation model is a skip-gram model.

6. An apparatus for generating a model for representing a heterogeneous graph node, comprising:
a first acquisition unit (601), configured to acquire (201) a training data set, wherein the training data set includes node walk path information obtained by sampling a heterogeneous graph according to different meta paths; and
a training unit (602), configured to train (202, 504), based on a gradient descent algorithm, an initial heterogeneous graph node representation model with the training data set as an input of the initial heterogeneous graph node representation model, to obtain a heterogeneous graph node representation model.

7. The apparatus according to claim 6, further comprising:
a second acquisition unit, configured to acquire (501) the heterogeneous graph; and
a determination unit, configured to determine (502) nodes of respective types in the heterogeneous graph and relations between the nodes of the respective types.

8. The apparatus according to claim 7, wherein the first acquisition unit (601) is further configured to:
for each meta-path in the different meta-paths, sample (503) the heterogeneous graph according to the nodes of the respective types in the heterogeneous graph and the relations between the nodes of the respective types, to obtain the node walk path information corresponding to the meta-path.

9. The apparatus according to claim 7, further comprising:
a node representation unit, configured to acquire (505) a node representation result of a to-be-processed heterogeneous graph by the pre-trained heterogeneous graph node representation model.

10. The apparatus according to claim 6, wherein
the initial heterogeneous graph node representation model is a skip-gram model.

11. An electronic device, comprising:
at least one processor; and
a memory, communicatively connected to the at least one processor; wherein,
the memory stores instructions executable by the at least one processor, when the instructions are executed by the at least one processor, causing the at least one processor to perform the method of any one of claims 1-5.

12. A non-transitory computer-readable storage medium storing computer instructions thereon, wherein the computer instructions, when executed by a processor, causes the processor to perform the method of any one of claims 1-5.

13. A computer program product comprising a computer program, the computer program, when executed by a processor, causes the processor to implement the method according to any one of claims 1-5.
